# EUROPEAN PATENT SPECIFICATION

(11) **EP 3 666 487 B1**
(45) Date of publication and mention of the grant of the patent: **27.08.2025**
(21) Application number: 19211170.6
(22) Date of filing: 25.11.2019
(51) Int. Cl.: B29C 35/02, B29C 35/08, B29C 37/00, B29C 70/44

(54) **METHOD FOR CURING OF THERMOSET COMPOSITES**
VERFAHREN ZUM HÄRTEN VON DUROPLASTISCHEN VERBUNDWERKSTOFFEN
PROCÉDÉ DE DURCISSEMENT DE COMPOSITES THERMODURCISSABLES

(30) Priority: 12.12.2018 US 201816218169
(43) Date of publication of application: 17.06.2020
(73) Proprietor: The Boeing Company, Arlington, VA 22202 (US)
(72) Inventor: Matsen, Marc R., Chicago, IL Illinois 60606 (US); Spalding, John F., Chicago, IL Illinois 60606 (US); Voss, Bret Alan McGinness, Chicago, IL Illinois 60606 (US); Blom-Schieber, Adriana W., Chicago, IL Illinois 60606 (US)
(74) Representative: Hoffmann Eitle

(56) References cited:
- EP-A1- 2 457 708
- EP-B1- 2 457 708
- US-A1- 2014 231 402

## Description

### TECHNICAL FIELD

The present disclosure generally relates to the fabrication of thermoset composite parts, and more particularly, with methods for the thermal and pressurized curing of thermoset composite parts.

### BACKGROUND

Polymer composites are tough, light-weight materials created by combining two or more functional components, such as reinforcing fibers bound in polymer resin matrix. Fabrication of thermoset composite parts commonly requires the application of both pressure and heat to complete the curing and consolidation process. For example, different pressure and temperature profiles, i.e. variations as a function of time, may be used to process thermoset composite parts. Generally, curing of a thermoset composite part is carried out in a pressurized autoclave where a heat source, such as resistive heating elements, supplies heat to the thermoset composite before or while a consolidation pressure is applied to the thermoset composite part. Production rate is significantly impacted by the time required to bring the autoclave up temperature and to heat the thermoset composite part before applying the consolidation pressure in the overall cure cycle time. Accordingly, there is a need to reduce the cure cycle time of thermoset composite parts by providing more efficient methods for the processing of the thermoset composite parts.

US 2014/0231402 describes reducing a thermal cycle time for curing a thermoset composite part in an autoclave by placing a heating blanket in proximity to an area of the composite part that is slow to heat, and inductively heating the area of the composite part that is slow to heat using the heating blanket.

### BRIEF SUMMARY

The present invention is defined in the appended claims.

This summary is intended merely to introduce a simplified summary of some aspects of one or more implementations of the present disclosure. This summary is not an extensive overview, nor is it intended to identify key or critical elements of the present teachings, nor to delineate the scope of the disclosure. Rather, its purpose is merely to present one or more concepts in simplified form as a prelude to the detailed description below.

The foregoing and/or other aspects and utilities embodied in the present disclosure may be achieved by providing a method for curing a thermoset composite part, including placing a thermoset composite part within a heating assembly; using the heating assembly to heat the thermoset composite part to a predetermined temperature; placing the heating assembly within a pressurization vessel; using the pressurization vessel to apply a consolidation pressure to the thermoset composite part until cure of the thermoset composite is complete; removing the heating assembly from the pressurization vessel; and using the heating assembly to cool down the thermoset composite part.

The heating assembly may include a cure tool configured to receive the thermoset composite part.

The heating assembly may further include one or more heating blankets configured to cover at least a portion of the thermoset composite part disposed on the cure tool or a portion of the cure tool corresponding to the portion of the thermoset composite part disposed on the cure tool, wherein the one or more heating blankets are configured to heat at least the portion of the thermoset composite part to the predetermined temperature.

The cure tool may include a heating element and may be configured to heat at least a portion of the thermoset composite part disposed on the cure tool to the predetermined temperature.

The cure tool may include a thermally conductive tool surface, and the tool surface may include a first surface configured to contact at least the portion of the thermoset composite part and a second surface configured to contact at least a portion of the one or more heating blankets, such that, heat generated by the one or more heating blankets is transmitted through the tool surface to heat at least the portion of the thermoset composite part in contact with the tool surface to the predetermined temperature.

At least one of the one or more heating blankets may be an inductive heating blanket including a smart susceptor, and the smart susceptor may have a Curie temperature corresponding to the predetermined temperature.

The consolidation pressure is applied to the thermoset composite part after the predetermined temperature is reached.

The heating assembly may heat the thermoset composite part within the pressurization vessel.

The heating assembly may be the source for heating the thermoset composite part.

The heating assembly may be removed from the pressurization vessel before the thermoset composite part has cooled down, and the cooling down of the thermoset composite part may be completed outside of the pressurization vessel.

The heating assembly heats the thermoset composite part to the predetermined temperature before placing the heating assembly within the pressurization vessel.

The predetermined temperature may be one or more temperatures along a curing temperature profile for the thermoset composite part and the consolidation pressure may be one or more pressures applied along a curing pressure profile for the thermoset composite part.

The foregoing and/or other aspects and utilities embodied in the present disclosure may also be achieved by providing a method for curing a thermoset composite part, including placing a thermoset composite part within a heating assembly and heating the thermoset composite part according to a temperature profile for the thermoset composite part; placing the thermoset composite part within a pressurization vessel when the thermoset composite part reaches a predetermined temperature and applying a consolidation pressure to the thermoset composite part according to a pressure profile for the thermoset composite part; and removing the thermoset composite part from the pressurization vessel and cooling down the thermoset composite part.

The heating assembly may be the only heat source for the thermoset composite part.

The heating assembly may include one or more heating blankets configured to heat at least a portion of the thermoset composite part.

The heating of the thermoset composite starts outside of the pressurization vessel and the cool down of the thermoset composite part may be completed outside of the pressurization vessel.

Further areas of applicability will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The accompanying drawings, which are incorporated in, and constitute a part of this specification, illustrate implementations of the present teachings and, together with the description, serve to explain the principles of the disclosure. In the figures:
FIG. 1 illustrates a system for curing a thermoset composite part according to an implementation of the present disclosure.
FIG. 2 illustrates a cross sectional view of the area designated as "FIG. 2" in FIG. 1.
FIG. 3 illustrates a perspective view of a heating blanket according to an implementation of the present disclosure.
FIG. 4 is a schematic illustration of the heating blanket of FIG. 3 and associated power and control system.
FIG. 5 illustrates a sectional view of FIG. 4.
FIG. 6 illustrates an area designated as "FIG. 6" in FIG. 5.
FIG. 7 illustrates a method of curing a thermoset composite part according to an implementation of the present disclosure.
FIGS. 8 and 9A-9D201 illustrate a method of curing a thermoset composite part according to an implementation of the present disclosure.
FIG. 10 illustrates a flow diagram of aircraft production and service methodology.
FIG. 11 illustrates a block diagram of an aircraft.

It should be noted that some details of the figures have been simplified and are drawn to facilitate understanding of the present teachings rather than to maintain strict structural accuracy, detail, and scale.

### DETAILED DESCRIPTION

Reference will now be made in detail to exemplary implementations of the present teachings, examples of which are illustrated in the accompanying drawings. Generally, the same reference numbers will be used throughout the drawings to refer to the same or like parts.

A thermoset composite part is generally cured by subjecting it to a combination of heat and pressure according to a predetermined cure schedule specifying applied pressures, temperatures and durations for which the pressures and temperatures are maintained. These schedule temperatures and pressures are sometimes referred to as the curing temperate profile and the consolidation pressure profile.

With respect to fiber-reinforced thermoset polymer composite parts, curing generally refers to the application of heat and/or pressure to crosslink and consolidate the fibers of a fiber-reinforced thermoset polymer composite part. While thermoset resins can be partially cured (i.e. crosslinked) without the application of pressure, it often results in a poorly consolidated part. Accordingly, as used herein, the terms "cure" and "curing" include both the application of heat (to cure/crosslink) and the application of pressure (to consolidate) fiber-reinforced thermoset polymer composite parts, such as the thermoset composite parts of the present disclosure.

As described below, the inventors have developed a new system and method for curing thermoset composite parts requiring the application of both heat and pressure. While the following description of the system and methods are made in relation to a thermoset composite part, please note the present disclosure is not limited thereto. The system and method described below is applicable to other materials requiring the applications of heat and pressure to cure, such as to cure adhesives for structural bonding and to consolidate thermoplastic fiber-reinforced composites.

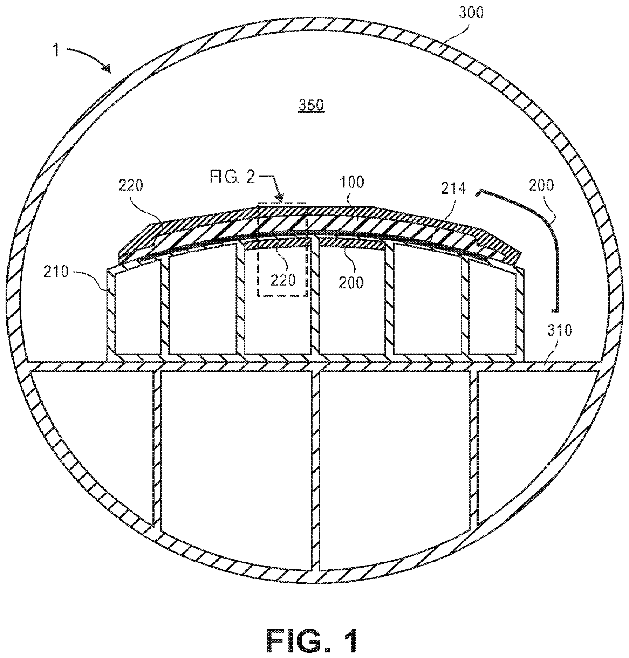

As illustrated in FIG. 1, in one implementation of the present disclosure, a system 1 for curing a thermoset composite part 100 may include a heating assembly 200 and a pressurization vessel 300. The heating assembly 200 may be configured to receive the thermoset composite part 100 and to heat the thermoset composite part 100 to a predetermined temperature, for example, the curing temperature, or according to the curing temperature profile required to cure the thermoset composite part 100. The pressurization vessel 300 may be configured to apply a consolidation pressure or consolidation pressure profile to the thermoset composite part 100 when the heating assembly 200 is placed within the pressurization vessel 300, for example, after the thermoset composite part 100 has reached a curing temperature or at a specific temperature of the curing temperature profile.

The thermoset composite part 100 may include laminated plies of fiber reinforced polymer resin, such as, carbon fiber epoxy or other thermosets that must be heated to a preselected temperature in order to effect curing. For example, as illustrated in FIGS. 1-2, the thermoset composite part 100 may include a sandwich panel of a honeycomb core 140 sandwiched between inner and outer face sheets 160 and 180. In one implementation, the honeycomb core 140 is stable at the predetermined temperature. Each of inner and outer face sheets 160 and 180 may include multiple laminated plies (not shown) of a fiber reinforced thermosetting resin, such as carbon fiber epoxy. However, please note that while one type of thermoset composite part 100 is illustrated in FIGS. 1-2, the present disclosure is not limited thereto, and a wide range of other constructions and geometries are possible for the thermoset composite part 100.

Consolidation is an important step in the curing process of a composite article. Generally, a consolidation pressure is applied during processing of a composite article to remove trapped air or volatiles produced by the cross-linking reaction of the thermoset resin. Consolidation process also helps to ensure intimate contact of the fibers and the resin within the final cured composite article.

Accordingly, in some implementations, the pressurization vessel 300 is configured to apply a predetermined pressure to the thermoset composite part 100. For example, the pressurization vessel 300 may be configured to apply a consolidation pressure to a thermoset composite part 100 for a predetermined period. In one implementation, the predetermined period for the application of the consolidation pressure starts only after the thermoset composite part 100 is heated to a predetermined temperature, such as a curing temperature. In other implementations, the predetermined period for the application of the consolidation pressure starts before the thermoset composite part 100 is heated to a predetermined temperature. In some implementations, the pressure level may also be increased or decreased as a function of time and temperature according to the temperature and pressure profiles.

In one implementation, the consolidation pressure is 3447 kPa or less (500 psi or less), 2758 kPa or less (400 psi or less), or 2068 kPa or less (300 psi or less). In another implementation, the consolidation pressure is from about 689 kPa (100 psi) to about 5171 kPa (750 psi). In one implementation, the consolidation pressure may be from about atmospheric pressure to about 3447 kPa (500 psi).

In some implementations, the heating assembly 200 is the only component configured to heat the thermoset composite part 100 to a predetermined temperature. Accordingly, in some implementations, the heating assembly is the source for heating the thermoset composite part. In other implementations, the pressurization vessel 300 is not configured to heat the thermoset composite part 100. In other implementations, the pressurization vessel 300 does not include heating elements capable of heating the thermoset composite part 100 to a predetermined temperature, such as a curing temperature. In some implementations, the pressurization vessel 300 may be an autoclave with a heating capability, however, the pressurization vessel 300 is nonetheless not used to heat the thermoset composite part 100.

In one implementation, the predetermined temperature or temperature profile may be from just above room temperature 26.67°C (80 °F) to about 438°C (820 °F). In other implementations, the predetermined temperature or temperature profile may be from just above room temperature 26.67°C (80 °F) to about 177°C (350 °F).

The pressurization vessel 300 may include a cure rack 310 to support the heating assembly 200. In some implementations, the pressurization vessel 300 and/or the cure rack 310 may also include a power supply 330 to supply power to the heating assembly 200 within the pressurization vessel 300.

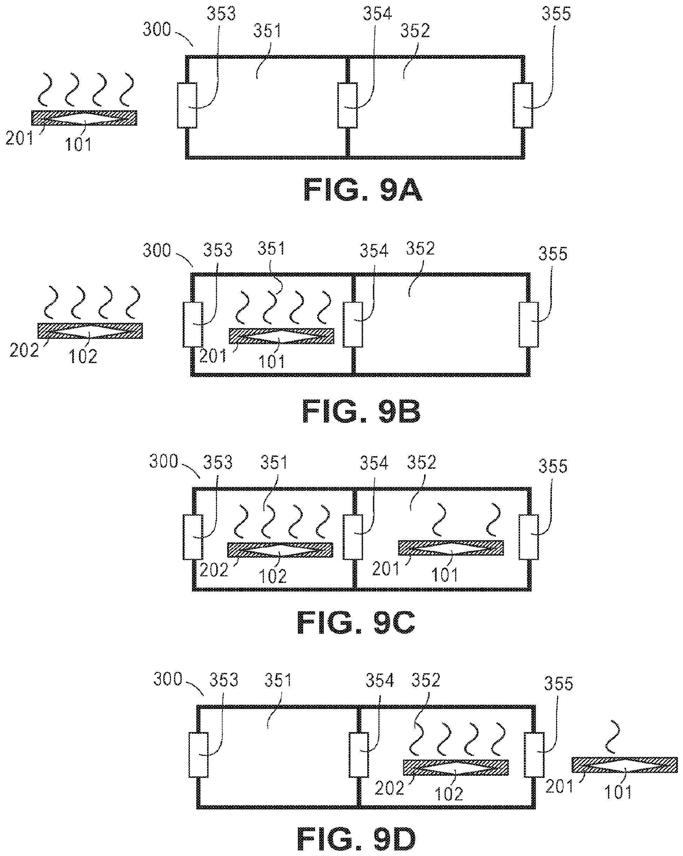

In order to increase a processing rate of a number of thermoset composite parts 100, in some implementations, the pressurization vessel 300 includes one or more pressurization chambers 350 (see pressurization chambers 351-352 in FIG. 9).

The pressurization vessel 300 may also include airlocks (see airlocks 353, 354, 355 in FIG. 9) between the one or more pressurization chambers 350 to facilitate the movements of various heating assemblies 200, each supporting a thermoset composite part 100, through the pressurization vessel 300. For example, see this process as described below with respect to method 900.

In one implementation, the heating assembly 200 includes a cure tool 210 and one or more heating blankets 220. The heating assembly may be configured to move into the pressurization vessel 300, and the pressurization vessel 300 may include a cure rack 310 to support the heating assembly 200 inside of the pressurization vessel 300.

In some implementations, the system 1 includes a cart 400 (not illustrated) to transport the heating assembly 200 into and/or within the pressurization vessel 300. For example the cart 400 may support the heating assembly 200 and provide an on-board power source to power the heating assembly 200, for example, an alternating current power supply 364. In other implementations, the cart 400 may be configured to connect to the power supply 330 of the pressurization vessel 300 to provide power to the heating assembly 200 when within the pressurization vessel 300. In other implementations, the cart may provide an on-board source of vacuum to the heating assembly. The cart may be configured to move on rails or overhead tracts, and the pressurization vessel 300 may be configured to allow the movement of the cart 400 into and within the pressurization vessel 300. In some implementations, the cart 400 may be self-propelled.

The cure tool 210 may be configured to receive and support the thermoset composite part 100 during a curing process. For example, the cure tool 210 may have a receiving face 211 with a shape that substantially matches the shape of the thermoset composite part 100.

In some implementations, the cure tool 210 may be heated. For example, the cure tool 210 may include a heated tool surface 214. The heated tool surface 214 may be disposed on the receiving face 211 and may cover at least a portion of the receiving face 211. The heated tool surface 214 may be configured to contact at least a portion of the thermoset composite part 100 supported by the cure tool 210.

The heated tool surface 214 may include a rigid layer of a suitable resin, such as epoxy or bis-maleimides (BMI), which encases an induction heating circuit 215. The rigid layer of resin may form an upper surface of the heated tool surface 214 and may be configured to match a lower surface of the thermoset composite part 100 disposed on the cure tool 210. In other implementations, other resins may be employed to fabricate the heated tool surface 214, including, but not limited to, polybenzoxazine (BXA).

The induction heating circuit 215 may include a plurality of inductive coil circuits, and the heated tool surface 214 may be configured to heat at least a portion of the thermoset composite part 100 to a predetermined temperature, such as a curing temperature or temperature profile. While some implementations use inductive heating to heat the cure tool 210, the present disclosure is not limited thereto and other heating methods may be used to heat the cure tool 210, such as resistive heating, forced air, heated oil, etc.

In other implementations, the heated tool surface 214 is a thermally conductive tooling surface and is heated by a heating blanket 220 disposed in contact with the heated tool surface 214. For example, a first surface of the heated tool surface 214 may be in contact with at least a portion of the thermoset composite part 100, while another opposite second surface of the heated tool surface 214 may be in contact with at least a portion of the one or more heating blankets 220. Accordingly, heat from the one or more heating blankets 220 may be transmitted through the heated tool surface 214 to heat at least a portion of the thermoset composite part 100.

As illustrated in FIGS. 1-2, the thermoset composite part 100 may be disposed on the cure tool 210, and at least a portion of the thermoset composite part 100 in contact with the heated tool surface 214 is heated by the heated tool surface 214 either directly or indirectly by the one or more heating blankets 220.

The one or more heating blankets 220 may be used to heat at least a portion of the thermoset composite part 100 supported by the cure tool 210. For example, as illustrated in FIGS. 1-2, the one or more heating blankets 220 may be disposed directly over a thermoset composite part 100 placed on an upper surface of the cure tool 210, to contact and directly heat the thermoset composite part 100. In other implementations, the one or more heating blankets 220 may be disposed to heat an exposed, outside, surface of the cure tool 210 to indirectly heat the thermoset composite part 100.

As will be discussed below in more detail, the one or more heating blankets 220 generate heat through electrical induction, and the generated heat is transferred to the thermoset composite part 100 and/or the cure tool 210 primarily through conduction, although, depending upon the geometry of the thermoset composite part 100, the cure tool 210, and/or the placement of the one or more heating blankets 220, the heat may also be transferred through convection and radiation. In one implementation, at least one of the one or more heating blankets 220 is an inductive heating blanket.

The one or more heating blankets 220 may be formed of a flexible material that allows them to substantially conform to the geometry of the thermoset composite part 100 or the cure tool 210.

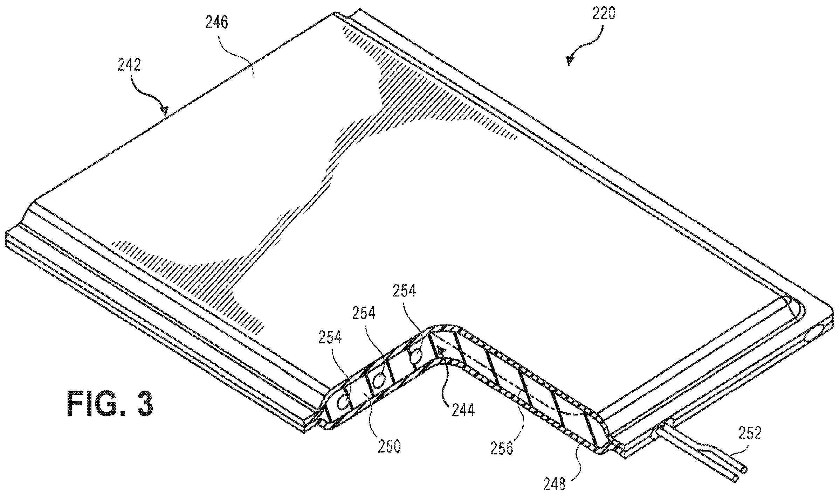

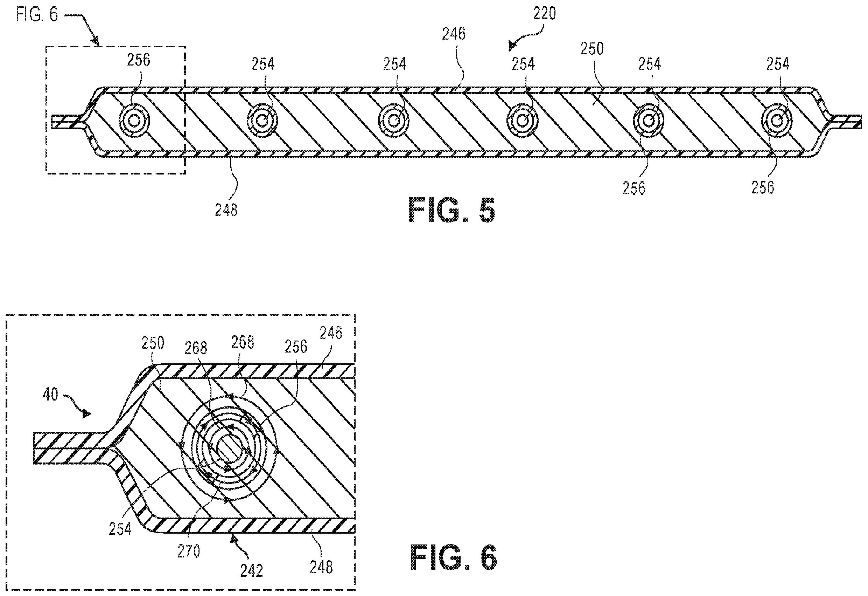

The one or more heating blankets 220 may employ any of various heating techniques to generate the heat necessary to heat the thermoset composite part to a predetermined temperature, such as a curing temperature or temperature profile. For example, the details of one suitable implementation of a heating blanket 220 are illustrated in FIGS. 3-6, wherein magnetic properties of magnetic materials are employed in combination with the application of high frequency alternating electrical power to generate heat. In this exemplary implementation, a heating blanket 220 comprises upper and lower face sheets 246 and 248 forming a housing 242 having an interior 244 that is filled with a thermally conductive matrix 250 (FIG. 5). The upper and lower face sheets 246 and 248 are preferably formed of a flexible, resilient material possessing a relatively high thermal conductivity and a relatively low electrical conductivity. For example, the upper and lower face sheets 246 and 248 may include silicone, rubber, polyurethane or other suitable elastomers that provide dimensional stability to the housing 242 while maintaining sufficient flexibility to allow the heating blanket 220 to conform to at least a portion of the surface of the thermoset composite part 100 and/or at least a portion of the cure tool 210, including surfaces that are irregular or contoured. In one implementation, the matrix 250 includes an elastomer that is cast around an inductive heating element 252. In still other implementations, however, the heating blanket 220 may not be flexible and the housing 242 may be formed into a permanent, non-flexible shape that suits a particular application or thermoset composite part 100.

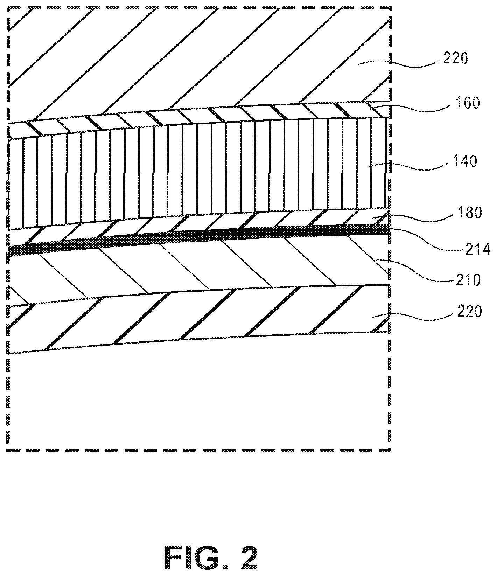

As described above, an inductive heating element 252 may be embedded within the matrix 250. The inductive heating element 252 may include an electrical conductor 254 and a surrounding susceptor sleeve 256 which are co-axially arranged. The electrical conductor 254 may comprise, for example and without limitation, a Litz wire over which a spiral type susceptor is sleeved. The susceptor sleeve 256 may extend substantially the entire length of the electrical conductor 254. Axial spacing between the electrical conductor 254 and the susceptor sleeve 256 electrically insulates the susceptor sleeve 256 from the electrical conductor 254. In the disclosed implementation, the inductive heating element 252 is arranged in a serpentine pattern with generally parallel legs 255, however other patterns and layout arrangements are possible. While only a single inductive heating element 252 is shown in the exemplary implementation, other implementations may include multiple inductive heating elements 252. The susceptor sleeve 256 is inductively heated by alternating electrical current flow through the electrical conductor 254. The inductively heated susceptor sleeve 256 conducts heat to the matrix 250, which in turn conducts heat through the housing 242 to the thermoset composite part 100 and/or the cure tool 210 (FIGS. 1 and 2), against which the heating blanket 220 is in contact.

The matrix 250 may include ferromagnetic or superparamagnetic particles (not shown) to aid in heating the matrix 250. Where ferromagnetic particles are employed, the matrix 250 is heated by hysteretic heating of the ferromagnetic particles to a temperature that is substantially below the Curie temperature of the particles. Where superparamagnetic particles are incorporated into the matrix 250, the heat that is conducted through the matrix 250 is generated by relaxation heating of the superparamagnetic particles in correspondence to a Curie temperature range related to the size or diameter of the superparamagnetic particles.

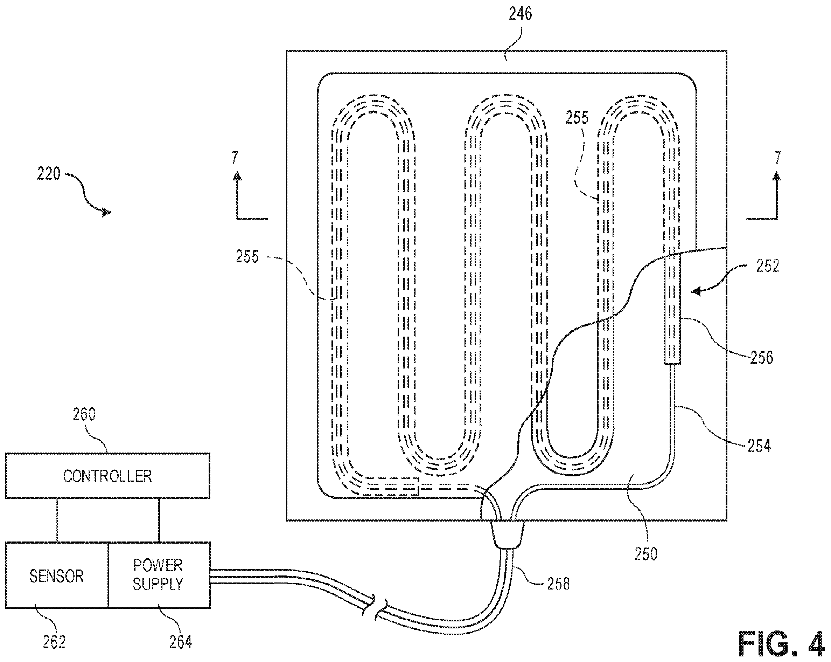

Referring particularly to FIG. 4, suitable wiring 258 connects the heating element 252 to an alternating current power supply 264 that may be either a portable or fixed power supply. The power supply 264 is connected to a power source, such as for example and without limitation, a conventional 60 Hz, 110 volt or 220 volt outlet (not shown). The power supply 264 supplies alternating current to the conductor 254, preferably in the range from approximately 1,000 Hz to approximately 300,000 Hz, although higher frequencies are possible. One or more thermal sensors 262 may be located between the heating blanket 220 and the structure against which it has been placed for monitoring the temperature of the structure in order to facilitate regulation of the magnitude or frequency of the alternating current supplied to the conductor 254. The power supply 264 can be regulated by a suitable controller 260 based on the temperatures monitored by the thermal sensors 262.

As shown in FIGS. 5 and 6, the susceptor sleeve 256 is formed of a magnetic material having a Curie temperature. The susceptor sleeve 256 may be formed as a solid or unitary component in a cylindrical arrangement, preferably from a braided material in a sleeve configuration around the conductor 254 in order to enhance flexibility of the heating blanket 220.

The flow of alternating current through the conductor 254 results in the generation of a magnetic field 268 surrounding the susceptor sleeve 256. Eddy currents 270 are generated within the conductor 254 as a result of exposure thereof to the magnetic field 268, and these eddy currents 270 cause the inductive heating of the susceptor sleeve 256. Heat from the susceptor sleeve 256 is then conducted through the matrix material 250, and the housing 242 to the thermoset composite part 100 and/or the cure tool 210 (FIGS. 1 and 2) or other structure. The magnetic material from which the susceptor sleeve 256 is formed preferably has a high magnetic permeability and a Curie temperature that corresponds to the desired temperature to which the thermoset composite part 100 is to be heated by the heating blanket 220, i.e. the cure temperature of the thermoset composite part 100. The susceptor sleeve 256 and the conductor 254 are preferably sized and configured such that at temperatures below the Curie temperature of the susceptor sleeve 256, the magnetic field 268 is concentrated in the susceptor sleeve 256 due to its magnetic permeability.

Heating of the susceptor sleeve 256 continues during application of the alternating current until the magnetic material from which the susceptor sleeve 256 is formed of reaches the Curie temperature. Upon reaching the Curie temperature, the susceptor sleeve 256 becomes nonmagnetic, at which point the magnetic fields 268 are no longer concentrated in the susceptor sleeve 256. The induced eddy currents 270 and associated resistive heating diminishes to a level sufficient to maintain the temperature of the susceptor sleeve 256 at the Curie temperature, consequently the thermoset composite part 100 and/or the cure tool 210 remains heated to the desired cure temperature for the duration of the cure cycle, at which point the alternating current is removed from the conductor 254.

It should be noted here that FIGS. 3-6 illustrate only one of several possible constructions of a heating blanket 220. Other constructions are possible. For example, and without limitation, the susceptor sleeve 256 may comprise a spring shaped coil that is sleeved over a Litz wire (conductor 254). Alternatively, the heating blanket 220 may comprise a woven design wherein one direction of the weave comprises a Litz wire 254, and the other direction of the weave comprises a smart susceptor wire. Moreover, in other implementations, the smart susceptors 256 may be encased in a flattened solenoidal coil (not shown) formed of a Litz wire.

As illustrated in FIGS. 1-2, in some implementations, the thermoset composite part 100 may be disposed on the cure tool 210, and one or more heating blankets 220 may be disposed directly over the thermoset composite part 100, or in contact with portions of the cure tool 210 supporting the thermoset composite part 100, such that, at least a portion of the thermoset composite part 100 in direct or indirect contact with the one or more heating blankets 220 is heated by the one or more heating blankets 220.

The heating assembly 200 may include a vacuum bag assembly 290 (not illustrated). In some implementations, the vacuum bag assembly 290 may be installed over the one or more heating blankets 220. For example, the vacuum bag assembly 290 may include a bagging film to cover at least one of the one or more heating blankets 220 which may be sealed to an upper surface of the cure tool 210 and/or the thermoset composite part 100 by means of sealant. In some implementations, a vacuum is drawn from the vacuum bag assembly 290 to apply a negative pressure and draw out volatiles and other gasses that may be generated as a result of the curing process of the thermoset composite part 100. In other implementations, the vacuum bag assembly 290 is placed and sealed over at least one of the one or more heating blankets 220 to compact the thermoset composite part 100 against the cure tool 210 during the curing process. In other implementations, the vacuum bag assembly 290 may be installed directly over the thermoset composite part 100 and may not cover the one or more heating blankets 220.

In some implementations, the cart 400 provides a vacuum source for the vacuum bag assembly 290.

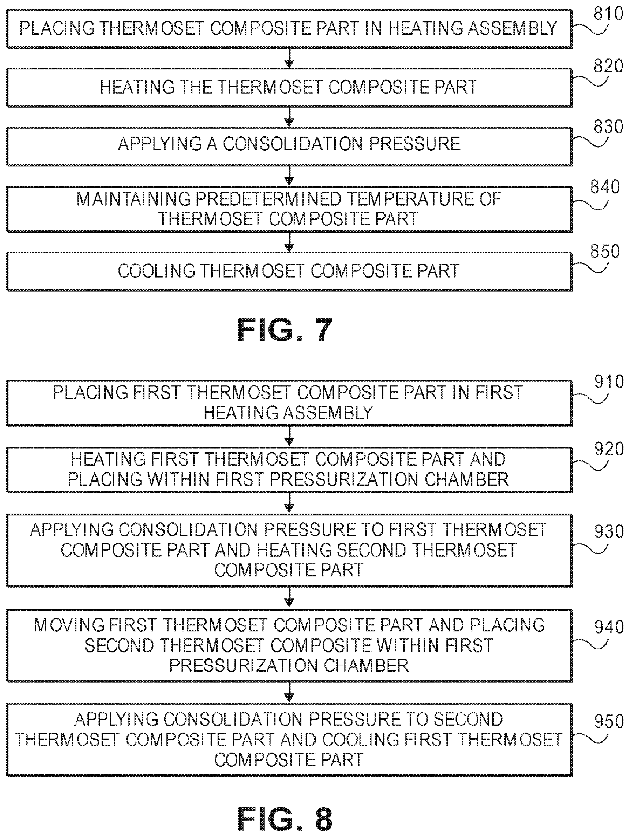

FIG. 7 illustrates a method of curing a thermoset composite part according to implementations of the present disclosure.

As illustrated in FIG. 7, a method 800 for curing a thermoset composite part 100 may begin with placing the thermoset composite part 100 in the heating assembly 200 in operation 810.

Operation 810 may include placing an uncured thermoset composite part 100 on the cure tool 210. In some implementations, one or more blankets 220 may also be placed either directly over at least a portion of the thermoset composite part 100 or in contact with at least portions of the cure tool 210 supporting the thermoset composite part 100. In some implementations, at least a portion of the thermoset composite part 100 is disposed over a heated tool surface 214 of the cure tool 210.

In operation 820, the heating assembly 200 is used to heat the thermoset composite part 100 to a predetermined temperature. In some implementations, the predetermined temperature is a curing temperature corresponding to the composition of the thermoset composite part 100. In other implementations, the predetermined temperature corresponds to a temperature along the curing temperature profile for the thermoset composite part 100.

In operation 830 a consolidation pressure is applied. In implementations that are in accordance with the appended claims, the heating assembly 200 is moved within a pressurization vessel 300 once the thermoset composite part 100 has reached the predetermined temperature and a consolidation pressure is applied by the pressurization vessel 300. In other implementations that are not in accordance with the wording of claim 1, the heating assembly 200 is moved within a pressurization vessel 300 before the thermoset composite part 100 has reached the predetermined temperature and is heated to the predetermined temperature by the heating assembly 200 within the pressurization vessel 300. The consolidation pressure is then applied by the pressurization vessel 300 once the predetermined temperature is reached.

In some implementations, the heating of the thermoset composite part 100 by the heating assembly 200 occurs entirely outside of the pressurization vessel 300. In other implementations, the heating of the thermoset composite part 100 by the heating assembly 200 occurs partly outside of the pressurization vessel 300. For example, in some implementations, the thermoset composite part 100 is heated to the point where resin may flow easily (that is, at a decreased viscosity of the resin) before placing the heating assembly 200 within the pressurization vessel 300.

In operation 840, the thermoset composite part 100 is maintained at the predetermined temperature for a predetermined time by the heating assembly 200. For example, in one implementation, the thermoset composite part 100 is maintained at the predetermined temperature for a period of time corresponding to the application of the consolidation pressure within the pressurization vessel 300. In another implementation, the thermoset composite part 100 is maintained at the predetermined temperature for a period of time outside of the pressurization vessel 300, during the application of the consolidation pressure within the pressurization vessel 300, and after the application of the consolidation pressure.

In operation 850, the thermoset composite part 100 is allowed cooled down on the heating assembly 200 and removed from the heating assembly 200. For example, in one implementation, the heating assembly 200 gradually reduces the heat applied to the thermoset composite part 100 to reduce its temperature from the predetermined temperature. In some implementations, the temperature reduction occurs while the heating assembly is within the pressurization vessel 300. Once the temperature of the thermoset composite part 100 has reduced sufficiently, the heating assembly 200 may be removed from the pressurization vessel 300 to allow the thermoset composite part 100 to further fully cool down. In other implementation, the heating assembly 200 may be removed from the pressurization vessel 300 while the thermoset composite part 100 is still at or near the predetermined temperature and allowed to cool down outside of the pressurization vessel 300. For example, in some implementations, the thermoset composite part 100 is stable at or near the predetermined temperature. Accordingly, the thermoset composite part 100 may be removed from the pressurization vessel 300 while at an elevated temperature and allowed to cool down outside of the pressurization vessel 300.

FIG. 8 and FIGS. 9A-D illustrate a method of curing a thermoset composite part according to implementations of the present disclosure. As illustrated in FIGS. 8-9, a multichamber pressurization vessel 300 may be used to allow higher processing rates for the curing of thermoset composite parts 100.

The method 900 may begin by placing a first thermoset composite part 101 in a first heating assembly 201 in operation 910 (see FIG. 9A).

In operation 920, the first thermoset composite part 101 is heated to a predetermined temperature by the first heating assembly 201 and placed within a first pressurization chamber 351 of the pressurization vessel 300 (see FIG. 9B). In one implementation that is in accordance with the appended claims, the first heating assembly 201 heats the first thermoset composite part 101 to the predetermined temperature before it is moved within the first pressurization chamber 351. In another implementation that is not in accordance with the wording of claim 1, the first heating assembly 201 heats the first thermoset composite part 101 to the predetermined temperature after it is moved within the first pressurization chamber 351.

In operation 930, a consolidation pressure is applied to the first thermoset composite part 101 within the first pressurization chamber 351. Concurrently, a second thermoset composite part 102 is placed in a second heating assembly 202 and heated outside of the pressurization vessel 300 (see FIG. 9B).

In operation 940, the first thermoset composite part 101 is moved to the second pressurization chamber 352, and the second thermoset composite part 102 is moved within the first pressurization chamber 351 using airlocks 353-355 (see FIG. 9C).

In one implementation that is in accordance with the appended claims, the second heating assembly 202 heats the second thermoset composite part 102 to the predetermined temperature before it is moved within the first pressurization chamber 351. In another implementation that is not in accordance with the wording of claim 1, the second heating assembly 202 heats the second thermoset composite part 102 to the predetermined temperature after it is moved within the first pressurization chamber 351.

In operation 940, a consolidation pressure is applied to the second thermoset composite part 102 within the first pressurization chamber 351. Concurrently, the first thermoset composite part 101 is cooled down by the first heating assembly 201 within the second pressurization chamber 352.

In some implementations, a pressurization pressure is applied to the first and second thermoset composite parts 101 and 102 by at least one of the first pressurization chamber 351 and the second pressurization chamber 352 for a predetermined period of time. In other implementations, the pressurization pressure is applied by one of the first pressurization chamber 351 and the second pressurization chamber 352 for a predetermined period of time.

In operation 950, the first thermoset composite part is removed from the second pressurization chamber 352 of pressurization vessel 300 and allowed to cool down (See FIG. 9D). For example, in some implementations, when the first thermoset composite part 101 cools down sufficiently it is removed from the second pressure chamber 352 and allowed to cool down completely outside of the pressurization vessel 300. Concurrently, the second thermoset composite part 102 is moved to the second pressurization chamber 352 to allow a subsequent heated thermoset composite part to enter the pressurization vessel 300 (See FIG. 9D). In some implementations, the use of airlocks 353-355 allows the movement of thermoset composite part within the pressurization vessel 300 without the need to cycle the pressure up and down. That is, in some implementations, a pressure within the pressurization vessel 300 is maintained at the consolidation pressure or along a curing pressure profile during the movement of the first and second thermoset composite parts within the pressurization vessel 300, as well as, during the introduction of any subsequent heated thermoset composite parts into the pressurization vessel 300.

Accordingly, in some implementations, by using a heating assembly 200 to heat and cool down a thermoset composite part 100 outside of the pressurization vessel 300, a curing cycle time for the thermoset composite part 100 can be optimized and a time spent within the pressurization vessel 300 can be minimized.

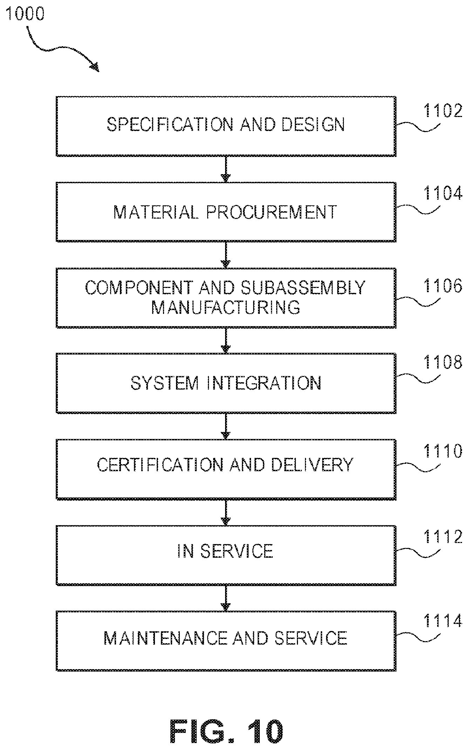

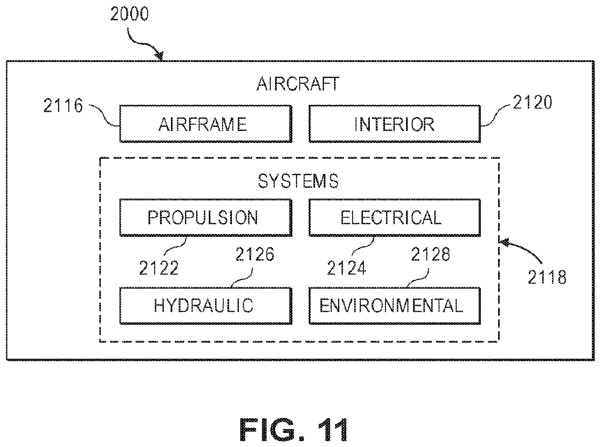

Implementations of the disclosure may find use in a variety of potential applications, particularly in the transportation industry, including for example, aerospace, marine, automotive applications, and other application where thermal curing of thermoset composite parts is carried out. Thus, referring now to FIGS. 10 and 11, implementations of the disclosure may be used in the context of an aircraft manufacturing and service method 1000 as shown in FIG. 10 and an aircraft 2000 as shown in FIG. 11. During pre-production, exemplary method 1000 may include specification and design 1102 of the aircraft 2000 and material procurement 1104. During production, component and subassembly manufacturing 1106 and system integration 1108 of the aircraft 2000 takes place. Thereafter, the aircraft 2000 may go through certification and delivery 1110 in order to be placed in service 1112. While in service by a customer, the aircraft 2000 is scheduled for routine maintenance and service 1114, which may also include modification, reconfiguration, refurbishment, and so on.

Each of the processes of method 1000 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 11, the aircraft 2000 produced by exemplary method 1000 may include an airframe 2116 with a plurality of systems 2118 and an interior 2120. Examples of high-level systems 2118 include one or more of a propulsion system 2122, an electrical system 2124, a hydraulic system 2126, and an environmental system 2128. Any number of other systems may be included. Although an aerospace example is shown, the principles of the disclosure may be applied to other industries, such as the marine and automotive industries.

Systems and methods embodied herein may be employed during any one or more of the stages of the production and service method 1000. For example, components or subassemblies corresponding to production process 1106 may be fabricated or manufactured in a manner similar to components or subassemblies produced while the aircraft 2000 is in service. Also, one or more apparatus embodiments, method embodiments, or a combination thereof may be utilized during the production stages 1106 and the 1108, for example, by substantially expediting assembly of or reducing the cost of an aircraft 2000. Similarly, one or more of apparatus embodiments, method embodiments, or a combination thereof may be utilized while the aircraft 2000 is in service, for example and without limitation, to maintenance and service 1114.

Notwithstanding that the numerical ranges and parameters setting forth the broad scope of the present teachings are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein. For example, a range of "less than 10" can include any and all sub-ranges between (and including) the minimum value of zero and the maximum value of 10, that is, any and all sub-ranges having a minimum value of equal to or greater than zero and a maximum value of equal to or less than 10, e.g., 1 to 5. In certain cases, the numerical values as stated for the parameter can take on negative values. In this case, the example value of range stated as "less than 10" can assume negative values, e.g. - 1, -2, -3, -10, -20, -30, etc.

While the present teachings have been illustrated with respect to one or more implementations, alterations and/or modifications can be made to the illustrated examples without departing from the scope of the appended claims. For example, it will be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or implementations of the present teachings. It will be appreciated that structural components and/or processing stages can be added or existing structural components and/or processing stages can be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of" is used to mean one or more of the listed items can be selected. As used herein, the term "one or more of" with respect to a listing of items such as, for example, A and B, means A alone, B alone, or A and B. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated implementation. Finally, "exemplary" indicates the description is used as an example, rather than implying that it is an ideal. Other implementations of the present teachings will be apparent to those skilled in the art from consideration of the specification and practice of the disclosure herein.

Terms of relative position as used in this application are defined based on a plane parallel to the conventional plane or working surface of a workpiece, regardless of the orientation of the workpiece. The term "horizontal" or "lateral" as used in this application is defined as a plane parallel to the conventional plane or working surface of a workpiece, regardless of the orientation of the workpiece. The term "vertical" refers to a direction perpendicular to the horizontal. Terms such as "on," "side" (as in "sidewall"), "higher," "lower," "over," "top," and "under" are defined with respect to the conventional plane or working surface being on the top surface of the workpiece, regardless of the orientation of the workpiece.

It is intended that the specification and examples be considered as exemplary only, with a true scope of the present teachings being indicated by the following claims.

## Claims

1. A method (800, 900, 1000) for curing a thermoset composite part (100), comprising:
placing a thermoset composite part (100) within a heating assembly (200);
using the heating assembly (200) to heat the thermoset composite part (100) to a predetermined temperature;
placing the heating assembly (200) within a pressurization vessel (300);
using the pressurization vessel (300) to apply a consolidation pressure to the thermoset composite part (100);
removing the heating assembly (200) from the pressurization vessel (300); and
using the heating assembly (200) to cool down the thermoset composite part (100);
wherein the heating assembly (200) heats the thermoset composite part (100) to the predetermined temperature before the heating assembly (200) is placed within the pressurization vessel (300).

2. The method (800, 900, 1000) of claim 1, wherein the heating assembly (200) comprises:
a cure tool (210) configured to receive the thermoset composite part (100).

3. The method (800, 900, 1000) of claim 2, wherein the heating assembly (200) further comprises:
one or more heating blankets (220) configured to cover at least a portion of the thermoset composite part (100) disposed on the cure tool (210) or a portion of the cure tool (210) corresponding to a portion of the thermoset composite part (100) disposed on the cure tool (210),
wherein the one or more heating blankets (220) are configured to heat at least a portion of the thermoset composite part (100) to the predetermined temperature.

4. The method (800, 900, 1000) of claim 2 or 3, wherein the cure tool (210) comprises a heating element (252) and is configured to heat at least a portion of the thermoset composite part (100) disposed on the cure tool (210) to the predetermined temperature.

5. The method (800, 900, 1000) of claim 2 or 3:
wherein the cure tool (210) comprises a thermally conductive tool surface (214), and
wherein the tool surface (214) comprises a first surface (214) configured to contact at least a portion of the thermoset composite part (100) and a second surface (214) configured to contact at least a portion of the one or more heating blankets (220),
such that, heat generated by the one or more heating blankets (220) is transmitted through the tool surface (214) to heat at least a portion of the thermoset composite part (100) in contact with the tool surface (214) to the predetermined temperature.

6. The method (800, 900, 1000) of any one of claims 3 to 5, wherein the heating blanket (220) is an inductive heating blanket (220) comprising a smart susceptor, and wherein the smart susceptor has a Curie temperature corresponding to the predetermined temperature.

7. The method (800, 900, 1000) of any one of claims 1 to 6, wherein the heating assembly (200) further heats the thermoset composite part (100) within the pressurization vessel (300).

8. The method (800, 900, 1000) of any one of claims 1 to 7, wherein the pressurization vessel (300) does not have a heating element (252) and wherein the heating assembly (200) is the only source for heating the thermoset composite part (100).

9. The method (800, 900, 1000) of any one of claims 1 to 8, wherein the heating assembly (200) is removed from the pressurization vessel (300) before the thermoset composite part (100) has cooled down, and the cooling down of the thermoset composite part (100) is completed outside of the pressurization vessel (300).

## Patentansprüche

1. Verfahren (800, 900, 1000) zum Härten eines duroplastischen Verbundstoffteils (100), das Folgendes umfasst:
Einsetzen eines duroplastischen Verbundstoffteils (100) in eine Heizeinheit (200);
Verwenden der Heizeinheit (200), um das duroplastische Verbundstoffteil (100) auf eine vorbestimmte Temperatur zu erhitzen;
Einsetzen der Heizeinheit (200) in einen Druckbehälter (300);
Verwenden des Druckbehälters (300), um einen Verfestigungsdruck auf das duroplastische Verbundstoffteil (100) auszuüben;
Entfernen der Heizeinheit (200) aus dem Druckbehälter (300); und
Verwenden der Heizeinheit (200) zum Abkühlen des duroplastischen Verbundstoffteils (100);
wobei die Heizeinheit (200) das duroplastische Verbundstoffteil (100) auf die vorbestimmte Temperatur erhitzt, bevor die Heizeinheit (200) in den Druckbehälter (300) eingesetzt wird.

2. Verfahren (800, 900, 1000) nach Anspruch 1, wobei die Heizeinheit (200) Folgendes umfasst:
ein Härtungswerkzeug (210), das so konfiguriert ist, dass es das duroplastische Verbundstoffteil (100) aufnimmt.

3. Verfahren (800, 900, 1000) nach Anspruch 2, wobei die Heizeinheit (200) weiter Folgendes umfasst:
eine oder mehrere Heizdecken (220), die so konfiguriert sind, dass sie mindestens einen Teil des auf dem Härtungswerkzeug (210) angeordneten duroplastischen Verbundstoffteils (100) oder einen Teil des Härtungswerkzeugs (210) abdecken, der einem auf dem Härtungswerkzeug (210) angeordneten Abschnitt des duroplastischen Verbundstoffteils (100) entspricht,
wobei die eine oder die mehreren Heizdecken (220) so konfiguriert sind, dass sie mindestens einen Abschnitt des duroplastischen Verbundstoffteils (100) auf die vorbestimmte Temperatur erhitzen.

4. Verfahren (800, 900, 1000) nach Anspruch 2 oder 3, wobei das Härtungswerkzeug (210) ein Heizelement (252) umfasst und so konfiguriert ist, dass es mindestens einen Abschnitt des auf dem Härtungswerkzeug (210) angeordneten duroplastischen Verbundstoffteils (100) auf die vorbestimmte Temperatur erhitzt.

5. Verfahren (800, 900, 1000) nach Anspruch 2 oder 3,
wobei das Härtungswerkzeug (210) eine wärmeleitende Werkzeugoberfläche (214) umfasst, und
wobei die Werkzeugoberfläche (214) eine erste Oberfläche (214) umfasst, die so konfiguriert ist, dass sie mindestens einen Abschnitt des duroplastischen Verbundstoffteils (100) berührt, und eine zweite Oberfläche (214), die so konfiguriert ist, dass sie mindestens einen Abschnitt der einen oder mehreren Heizdecken (220) berührt,
sodass die von der einen oder den mehreren Heizdecken (220) erzeugte Wärme durch die Werkzeugoberfläche (214) übertragen wird, um mindestens einen Abschnitt des duroplastischen Verbundstoffteils (100), der mit der Werkzeugoberfläche (214) in Kontakt ist, auf die vorbestimmte Temperatur zu erhitzen.

6. Verfahren (800, 900, 1000) nach einem der Ansprüche 3 bis 5, wobei die Heizdecke (220) eine induktive Heizdecke (220) ist, die einen intelligenten Suszeptor umfasst, und wobei der intelligente Suszeptor eine Curie-Temperatur aufweist, die der vorbestimmten Temperatur entspricht.

7. Verfahren (800, 900, 1000) nach einem der Ansprüche 1 bis 6, wobei die Heizeinheit (200) das duroplastische Verbundstoffteil (100) innerhalb des Druckbehälters (300) weiter erhitzt.

8. Verfahren (800, 900, 1000) nach einem der Ansprüche 1 bis 7, wobei der Druckbehälter (300) kein Heizelement (252) aufweist, und wobei die Heizeinheit (200) die einzige Quelle für die Beheizung des duroplastischen Verbundstoffteils (100) ist.

9. Verfahren (800, 900, 1000) nach einem der Ansprüche 1 bis 8, wobei die Heizeinheit (200) aus dem Druckbehälter (300) entfernt wird, bevor das duroplastische Verbundstoffteil (100) abgekühlt ist, und die Abkühlung des duroplastischen Verbundstoffteils (100) außerhalb des Druckbehälters (300) abgeschlossen wird.

## Revendications

1. Procédé (800, 900, 1000) de durcissement d'une pièce composite thermodurcissable (100), comprenant :
le placement d'une pièce composite thermodurcissable (100) au sein d'un ensemble chauffant (200) ;
l'utilisation de l'ensemble chauffant (200) pour chauffer la pièce composite thermodurcissable (100) jusqu'à une température prédéterminée ;
le placement de l'ensemble chauffant (200) au sein d'un récipient de pressurisation (300) ;
l'utilisation du récipient de pressurisation (300) pour appliquer une pression de consolidation à la pièce composite thermodurcissable (100) ;
le retrait de l'ensemble chauffant (200) du récipient de pressurisation (300) ; et
l'utilisation de l'ensemble chauffant (200) pour refroidir la pièce composite thermodurcissable (100) ; dans lequel l'ensemble chauffant (200) chauffe la pièce composite thermodurcissable (100) jusqu'à la température prédéterminée avant que l'ensemble chauffant (200) ne soit placé au sein du récipient de pressurisation (300).

2. Procédé (800, 900, 1000) selon la revendication 1, dans lequel l'ensemble chauffant (200) comprend :
un outil de durcissement (210) configuré pour recevoir la pièce composite thermodurcissable (100).

3. Procédé (800, 900, 1000) selon la revendication 2, dans lequel l'élément chauffant (200) comprend en outre :
une ou plusieurs couvertures chauffantes (220) configurées pour recouvrir au moins une partie de la pièce composite thermodurcissable (100) disposée sur l'outil de durcissement (210) ou une partie de l'outil de durcissement (210) correspondant à une partie de la pièce composite thermodurcissable (100) disposée sur l'outil de durcissement (210),
dans lequel les une ou plusieurs couvertures chauffantes (220) sont configurées pour chauffer au moins une partie de la pièce composite thermodurcissable (100) jusqu'à la température prédéterminée.

4. Procédé (800, 900, 1000) selon la revendication 2 ou 3, dans lequel l'outil de durcissement (210) comprend un élément chauffant (252) et est configuré pour chauffer au moins une partie de la pièce composite thermodurcissable (100) disposée sur l'outil de durcissement (210) jusqu'à la température prédéterminée.

5. Procédé (800, 900, 1000) selon la revendication 2 ou 3 :
dans lequel l'outil de durcissement (210) comprend une surface d'outil thermiquement conductrice (214), et
dans lequel la surface d'outil (214) comprend une première surface (214) configurée pour entrer en contact avec au moins une partie de la pièce composite thermodurcissable (100) et une seconde surface (214) configurée pour entrer en contact avec au moins une partie des une ou plusieurs couvertures chauffantes (220),
de telle sorte que la chaleur générée par les une ou plusieurs couvertures chauffantes (220) est transmise à travers la surface d'outil (214) pour chauffer au moins une partie de la pièce composite thermodurcissable (100) en contact avec la surface d'outil (214) jusqu'à la température prédéterminée.

6. Procédé (800, 900, 1000) selon l'une quelconque des revendications 3 à 5, dans lequel la couverture chauffante (220) est une couverture chauffante inductive (220) comprenant un sucepteur intelligent, et dans lequel le sucepteur intelligent présente une température de Curie correspondant à la température prédéterminée.

7. Procédé (800, 900, 1000) selon l'une quelconque des revendications 1 à 6, dans lequel l'ensemble chauffant (200) chauffe en outre la pièce composite thermodurcissable (100) au sein du récipient de pressurisation (300).

8. Procédé (800, 900, 1000) selon l'une quelconque des revendications 1 à 7, dans lequel le récipient de pressurisation (300) ne présente pas d'élément chauffant (252) et dans lequel l'ensemble chauffant (200) est la seule source de chauffage de la pièce composite thermodurcissable (100).

9. Procédé (800, 900, 1000) selon l'une quelconque des revendications 1 à 8, dans lequel l'ensemble chauffant (200) est retiré du récipient de pressurisation (300) avant que la pièce composite thermodurcissable (100) ne soit refroidie, et le refroidissement de la pièce composite thermodurcissable (100) est achevé à l'extérieur du récipient de pressurisation (300).
